# EUROPEAN PATENT SPECIFICATION

(11) **EP 3 159 322 B1**
(45) Date of publication and mention of the grant of the patent: **18.09.2019**
(21) Application number: 16194103.4
(22) Date of filing: 17.10.2016
(51) Int. Cl.: C04B 35/117, C04B 35/593, C04B 35/80, F16B 37/00, F16B 39/00

(54) **HIGH FRACTURE TOUGHNESS CERAMIC SUPPORT NUT PLATE AND GANG CHANNEL**
KERAMIKTRÄGERMUTTERNPLATTE MIT HOHER BRUCHZÄHIGKEIT UND GANGKANAL
ÉCROU D'ANCRAGE DE SUPPORT EN CÉRAMIQUE TRÈS RÉSISTANT À LA RUPTURE ET BANDE À ÉCROUS PRISONNIERS

(30) Priority: 21.10.2015 US 201514918899
(43) Date of publication of application: 26.04.2017
(60) Divisional application: 19179352.0
(73) Proprietor: The Boeing Company, Chicago, IL 60606-2016 (US)
(72) Inventor: DICHIARA, Robert A., Chicago, IL Illinois 60606-2016 (US)
(74) Representative: Boult Wade Tennant LLP

(56) References cited:
- EP-A1- 0 334 577
- US-A- 4 975 014
- US-A1- 2002 064 615
- US-A1- 2009 095 443
- US-B1- 8 864 073
- PRECI ET AL: "The Combined Sensor System COMPARE for SHEFEX II", 16TH AIAA/DLR/DGLR INTERNATIONAL SPACE PLANES AND HYPERSONIC SYSTEMS AND TECHNOLOGIES CONFERENCE,, 1 January 2009 (2009-01-01), page 7pp, XP009193567,
- I. YURI ET AL: "Structural Design and High Pressure Test of a Ceramic Combustor for 1500°C Class Industrial Gas Turbine", VOLUME 5: MANUFACTURING MATERIALS AND METALLURGY; CERAMICS; STRUCTURES AND DYNAMICS; CONTROLS, DIAGNOSTICS AND INSTRUMENTATION; EDUCATION; GENERAL, 10 June 1996 (1996-06-10), XP055347758, DOI: 10.1115/96-GT-346 ISBN: 978-0-7918-7876-7
- BOHRK H ET AL: "Secure tightening of a CMC fastener for the heat shield of re-entry vehicles", COMPOSITE STRUCTURES, ELSEVIER SCIENCE LTD, GB, vol. 92, no. 1, 1 January 2010 (2010-01-01), pages 107-112, XP026668061, ISSN: 0263-8223, DOI: 10.1016/J.COMPSTRUCT.2009.07.002 [retrieved on 2009-07-07]
- MEI H ET AL: "High-temperature tensile properties and oxidation behavior of carbon fiber reinforced silicon carbide bolts in a simulated re-entry environment", CARBON, ELSEVIER, OXFORD, GB, vol. 48, no. 11, 1 September 2010 (2010-09-01), pages 3007-3013, XP027093602, ISSN: 0008-6223 [retrieved on 2010-02-01]

## Description

### FIELD

This disclosure pertains to a nut plate and an article that are constructed of an aluminum oxide ceramic material reinforced with silicon-carbide crystal whiskers, and a method for securing components together.

### BACKGROUND

Thermal protection systems (TPS), for example re-entry heat shields for spacecraft, fuselage sections of hypersonic vehicles, jet engine exhaust components, etc. are constructed of materials that need to be heat-resistant and must endure very harsh environments. Reentry vehicle surfaces are particularly difficult. The surface must have low catalycity because the shockwave just in front of the reentry vehicle surface disassociates the air molecules and provides the potential for additional heating. As the air molecules break apart and collided with the surface they recombine in an exothermic reaction. Since the surface acts as a catalyst, it is important that the surface has a low catalycity, this will reduce the propensity to augment the energy from this chemical reaction. These materials must also be resistant to hot oxygen, particularly resistant to atomic oxygen to minimalize scaling of the material surfaces. The materials must have high emissivity to ensure the maximum rejection of incoming convective heat through radiative heat transfer. These requirements are difficult to meet in thermal protection system applications such as tiles, blankets and other similar structures used in the thermal protection systems.

In thermal protection systems that employ tiles, blankets and ceramic matrix composite components, the tiles for example are primarily bonded in place. For many TPS applications, adhesively bonding insulation such as tiles is used to attach insulation to the outer mold lines of vehicles, for example hypersonic vehicles. There is an interest in mechanically attaching tiles, blankets and other forms of ceramic matrix composites for easy, quick replacements, or for maintenance, as well as the limitation in temperature of many adhesives.

However, in applications such as heat shield surfaces of re-entry vehicles, engine exhaust components and in hypersonic vehicle constructions, the use of metal nut plates and metal gang channels in attaching ceramic matrix components in these applications has been a problem. Most metals have high catalycity, low thermal emissivity, a high coefficient of thermal expansion and get soft and weaker with increases in temperature. If nut plates and gang channels are used to attach TPS or exhaust liners to a vehicle, they are usually made of high temperature metal alloys. Presently, most turbine engine exhaust components, nut plates and gang channels are mainly if not all made out of super alloy metals. The components are actively cooled so that the metal can survive the environment. As ceramic matrix composites and other ceramic components get implemented into turbine engine exhaust systems, the metal super alloy nut plates and gang channels can no longer be used because the metal cannot take the temperature. This is made worse by the ceramic matrix composite having a lower thermal conductivity compared to metal, so even if the panels were cooled, the nut plates and gang channels would still have a tendency to overheat.

PRECI et al "The Combined Sensor System COMPARE for SHEFEX II", 16th AIAA/DLR/DGLR International Space Planes and Hypersonic Systems and Technologies Conference, 1 January 2009, describes the combined sensor system COMPARE for SHEFEX II. The goal of this system is to simultaneously measure the temperature of the thermal protection system, the radiative heat flux and the absolute pressure. The gained data will allow the reconstruction of important trajectory parameters. Furthermore, due to the fast response capabilities of the detectors used in the sensor system it is possible to determine the dynamic behavior of the vehicle during flight. With regard to upcoming re-entry missions with relative high entry velocities the application of COMPARE on SHEFEX II will allow to increase the Technology Readiness Level of this sensor system. In this paper, the design and layout of the sensor system are presented. EP0334577A1 describes ceramic composites which possess improved mechanical properties, in particular, increased fracture toughness are provided by incorporating carbon coated silicon carbide whiskers in the ceramic to limit the formation of surface oxide on the whiskers. The carbon coating can be applied directly on the whiskers prior to mixing with the ceramic to form the composite or the carbon coating may be formed in-situ during sintering of the ceramic by applying an organic coating on the whiskers prior to mixing with the ceramic and carbonizing the organic coating during sintering of the composite.

### SUMMARY

The invention provides a nut plate according to claim 1. For the above set forth reasons and others, it would be much better for a nut plate or a gang channel used to fasten ceramic matrix composites in a thermal protection system to be constructed of a ceramic material. However, most strong ceramics are monolithic, brittle, notch sensitive, have thermal shock issues and are prone to catastrophic failure, which is not ideal for making nut plates and gang channels. Because ceramics in a nut plate or in a nut of a gang channel are brittle, hard and notch sensitive, machining internal screw threads of ceramic material is very difficult. Creating threaded ceramic fasteners is usually done in processes like injection molding before firing, but these types of threads are rounded and not precise due to firing shrinkage, and the ceramic fastener strength is still typically very low, with high scatter, and are not very predictable.

The high fracture toughness ceramic support nut plate and gang channel nut of this disclosure are constructed of an aluminum oxide ceramic material reinforced with crystal whiskers. In reference examples the nut plate and gang channel nut are constructed of silicon-nitride. The nut plate and gang channel nut meet the requirements of high strength over the entire temperature range in which they will be exposed, with high fracture toughness, minimal notch sensitivity, low catalycity, high thermal emissivity, high stiffness, high hardness, good thermal shock resistance and not scaling by hot atomic oxygen. Ceramics including alumina are naturally low in catalycity, the opposite of most metals. The crystal whiskers mixed with the aluminum oxide not only improve fracture toughness, but also increase the emissivity of the nut plate and gang channel nut. Again, the opposite of metal which has very low emissivity. The aluminum oxide ceramic material reinforced with the crystal whiskers also has a coefficient of thermal expansion that closely matches the coefficient of thermal expansion of oxide ceramic matrix components with which the nut plate is used and with which the gang channel nut is used.

In constructing the nut plate and the nuts of the gang channel, a mixture of an aluminum oxide ceramic material powder and crystal whiskers is prepared. In reference example constructions, silicon-nitride is used. The crystal whiskers are silicon-carbide crystal whiskers. The mixture is then hot pressed at a high temperature to form the nut plate. The nuts of the gang channel are prepared in the same manner. To form the internal screw threads in the bolt holes of the nut plate and in the nuts of the gang channel, graphite pre-forms are machined with external screw threads. The external screw threads are complementary to the internal screw threads of the bolt holes in the nut plate and the internal screw threads of the nuts of the gang channel. The pre-forms are placed inside the powder mixture of the aluminum oxide ceramic material powder and the crystal whiskers so that during compaction and heating of the mixture, the internal threads of the bolt holes in the nut plate and the internal threads of the nuts of the gang channel are formed around the graphite pre-forms. After the hot pressing of the mixture forming the nut plate and the nuts of the gang channel is completed, the much softer graphite pre-forms are cleaned out of the bolt holes of the nut plate and out of the nuts of the gang channel, leaving internal female screw threads in the bolt holes of the nut plate and in the nuts of the gang channel to exact dimensions. Since the internal screw threads were formed under pressure during sintering, the shrinkage normally associated with firing ceramics is eliminated.

In constructing the channel member of the gang channel, a ceramic matrix composite material is used.

The nut plate is used to secure together adjacent components, for example ceramic matrix composite panels by aligning fastener holes of the composite panels with the internal screw threaded holes formed in the nut plate. External screw threaded fasteners are then inserted through the aligned holes of the composite panels and the nut plate. Screw threading the fasteners through the holes of the composite panels and into the internal screw threaded holes of the nut plate secure the composite panels together.

In use of the gang channel to secure components together, for example ceramic matrix composite components, the internal screw threaded nuts are positioned in the channel member of the gang channel in a conventional manner. The gang channel is then used in a conventional manner to secure together two components.

The features, functions and advantages that have been discussed can be achieved independently in various embodiments or may be combined in yet other embodiments, further details of which can be seen with reference to the following description and drawings.

### BRIEF DESCRIPTION OF THE DRAWINGS

Figure 1 is a representation of a plan view of the nut plate of this disclosure.
Figure 2 is an end elevation view of the nut plate of Figure 1.
Figure 3 is a side elevation view of the nut plate of Figure 1.
Figure 4 is a representation of a method of constructing the nut plate of this disclosure.
Figure 5 is a representation of a plain view of the nut plate of this disclosure used to secure together two components.
Figure 6 is a representation of an end view of the nut plate of Figure 5.
Figure 7 is a representation of an end view of two nut plates used to secure two components together.
Figure 8 is a representation of a perspective view of the nut and channel member of the gang channel of this disclosure.
Figure 9 is a representation of the method of constructing the nut of the gang channel of this disclosure.
Figure 10 is a representation of the nut and the channel member of the gang channel of this disclosure assembled together.

### DESCRIPTION

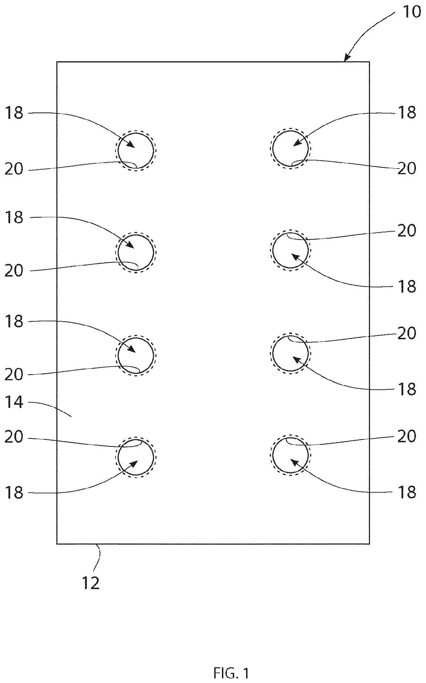

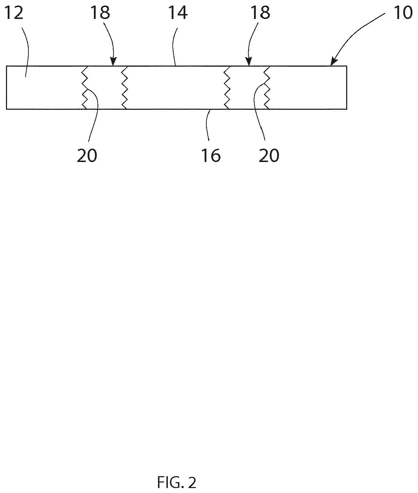

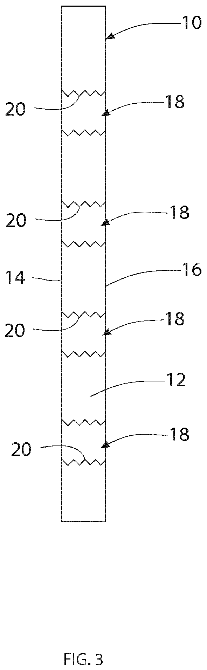

Figure 1 is a representation of a plan view of the nut plate (10) of this disclosure. Figure 2 is a representation of an end view of the nut plate (10). The opposite end of the nut plate (10) is a mirror image of the end of the nut plate represented in Figure 2. Figure 3 is a representation of a side view of the nut plate (10). The opposite side of the nut plate (10) is a mirror image of the side of the nut plate represented in Figure 3. As represented in Figures 1-3, the configuration of the nut plate (10) is conventional.

The nut plate (10) has a generally rectangular configuration defined by a peripheral edge (12) of the nut plate (10). The nut plate (10) has a flat, smooth front surface (14) and an opposite, flat, smooth back surface (16). The nut plate (10) has a plurality of cylindrical interior bores or fastener holes (18) that pass through the nut plate. Each of the interior bores (18) has a screw threaded interior surface (20) surrounding the interior bore. In Figure 1, the nut plate (10) is represented with eight interior bores (18) and eight interior screw threaded surfaces (20). It should be understood that the eight interior bores (18) represented in Figure 1 is only one example of the number of interior bores (18) that could be provided in the nut plate (10).

The nut plate (10) represented in Figures 1-3 is unique in that it is constructed as a high temperature nut plate. This is achieved by the nut plate (10) being constructed of a ceramic composite that uses the technology of whisker reinforcement. The hard ceramic matrix is reinforced with extremely strong, stiff crystals, commonly called whiskers. The nut plate (10) is constructed of a ceramic matrix composite material that is a mixture of aluminum-oxide ceramic material powder reinforced with silicon-carbide crystal whiskers. One example of a ceramic matrix composite material used to construct the nut plate (10) is the whisker reinforced ceramic material WG-300®, which is a registered trademark of Greenleaf Corporation. In WG-300®, the percentage of silicon-carbide crystal whiskers in the mixture of aluminum oxide ceramic material powder and the silicon-carbide crystal whiskers is approximately 30%. In other examples of the ceramic composite material used to construct the nut plate (10), the percentage of silicon-carbide crystal whiskers in the mixture of aluminum oxide ceramic material powder and the silicon-carbide crystal whiskers is in a range of 18%-30% of the mixture.

In reference examples of the nut plate (10), the nut plate is constructed of the ceramic material silicon-nitride.

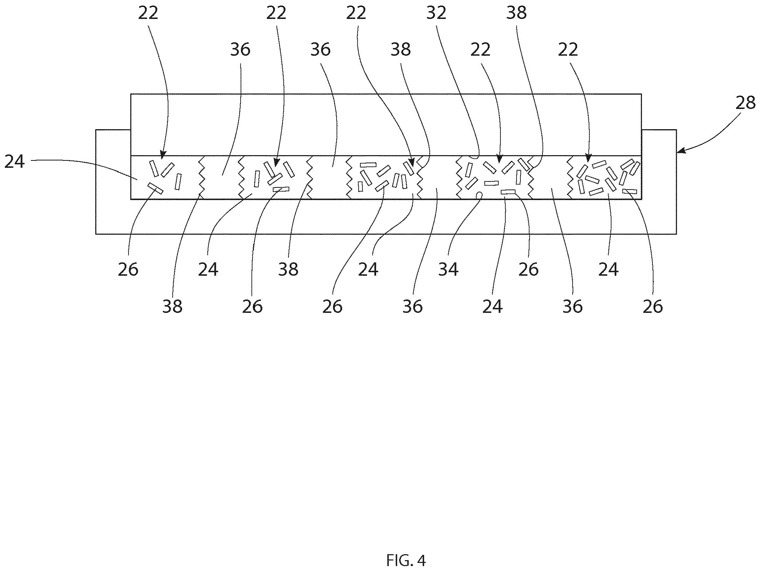

The method of constructing the nut plate (10) is represented in Figure 4. In the construction of the nut plate (10), a mixture (22) of aluminum oxide ceramic material powder (24) and the silicon-carbide crystal whiskers (26) is prepared. The mixture (22) of the aluminum oxide ceramic material powder (24) and the silicon-carbide crystal whiskers (26) is put into a high temperature, high pressure press (28) for forming the nut plate (10). Figure 4 shows a representation of a high temperature, high pressure press (28). In Figure 4, the aluminum oxide ceramic material powder (24) and the silicon-carbide crystal whiskers (26) are represented schematically and are not shown to scale. The press (28) has mold die pieces (32), (34) that are configured to form the nut plate (10) from the aluminum oxide ceramic material powder (24) and the silicon-carbide crystal whiskers (26) of the mixture (22). The mixture (22) is positioned in the press (28) between the press die pieces (32), (34) and is hot pressed at a temperature of over 1649°C (3,000 degrees Fahrenheit), while the mixture (22) is compressed at a high pressure to form the nut plate (10). The nut plate (10) is dense and has a fine grain size. External pressure applied to the mixture (22) simultaneously with the temperature of the press (28) produces a good consolidation of the aluminum oxide ceramic material powder (24) and the reinforcing silicon-carbide crystal whiskers (26). The aluminum oxide ceramic material and the reinforcing silicon-carbide crystal whiskers of the mixture (22) produce the nut plate (10) of hard ceramic material with high fracture toughness.

In developing the method of forming interior bores (18) with internal screw threaded surfaces (20) in the nut plate (10), it was recognized that it would be very difficult, if not impossible to machine internal screw threads in the very hard ceramic material of the nut plate (10), at least cost-efficiently. To form the screw threaded interior surfaces (20) in the nut plate (10), graphite pre-forms or inserts (36) are machined with external screw threads (38) that are complementary to the screw threaded interior surfaces (20) of the nut plate (10). As represented in Figure 4, the pre-forms (36) are placed inside the mixture (22) in the press (28). The pre-forms (36) are positioned at the desired positions of the screw threaded interior surfaces (20) of the interior bores (18). During heating and compression of the mixture (22) in the press (28) into the dense, finished ceramic nut plate (10), the screw threaded interior surfaces (20) of the nut plate (10) are formed around the graphite pre-forms (36). After the hot pressing of the mixture (22) forming the nut plate (10) is completed, the soft graphite pre-forms (36) having the external screw threaded surfaces (38) are easily cleaned out of the nut plate (10), leaving cost efficient, clean, precise screw threaded interior surfaces (20) in the nut plate (10). Because the screw threaded interior surfaces (20) are formed during the pressure sintering around the pre-forms (36), no shrinkage of the screw threaded interior surfaces (20) occurs. This enables the production of high tolerance screw threaded interior surfaces (20) that match closely to screw threaded exterior surfaces on mating fastener bolts.

In an alternate nut plate construction (reference example), silicon-nitride is used in place of the mixture of aluminum oxide ceramic material powder and the silicon-carbide crystal whiskers. Other than this change, the method of constructing the nut plate (10) is the same and the nut plate (10) constructed according to the method is the same.

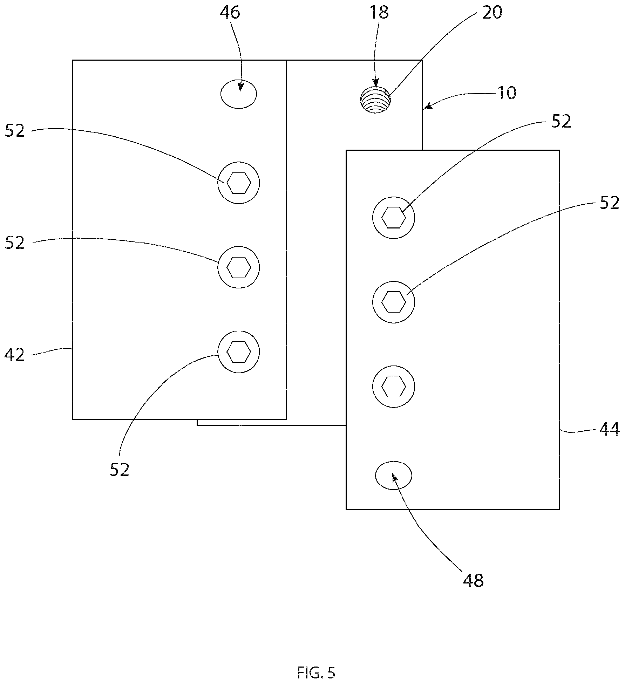

Figure 5 is a representation of the nut plate (10) used to connect two ceramic matrix composite components (42), (44) together. In the representation of Figure 5 the ceramic matrix composite components (42), (44) are panels. In connecting the panels (42), (44) together, the panels are provided with interior bores or fastener holes (46), (48) that are positioned through the panels at positions that correspond to the positions of the screw threaded interior surfaces (20) of the nut plate (10). A plurality of fasteners or bolts (52) as represented in Figure 5 are then inserted through the panel bores (46), (48) and screwed into the screw threaded interior surfaces (20) of the nut plate (10). The bolts (52) could be constructed as conventional metal bolts, or could also be constructed of the mixture of aluminum oxide ceramic material powder and the silicon-carbide crystal whiskers.

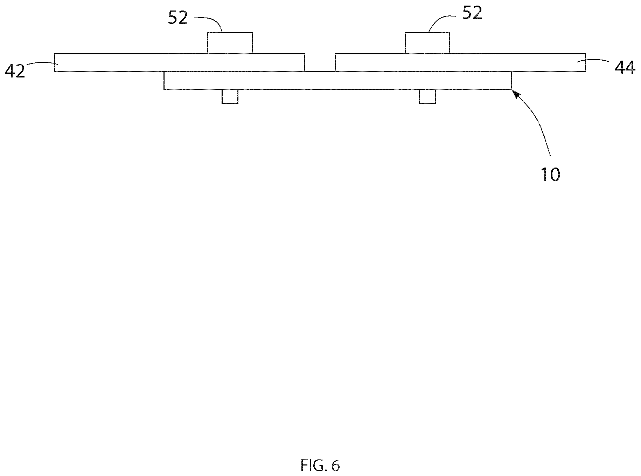

Figure 6 is a representation of an end view of the nut plate (10), the panels (42), (44) and the bolts (52) represented in Figure 5.

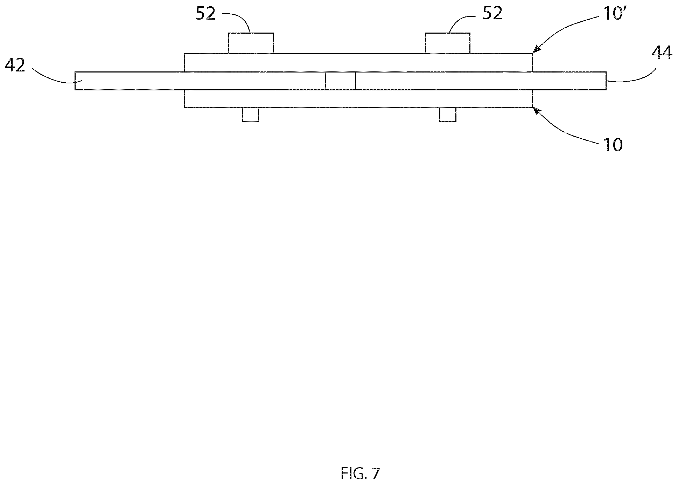

Figure 7 is a representation similar to that of Figure 6, but showing two nut plate (10) and one top cover plate with just through holes (no threads) (10') securing the panels (42), (44) together on opposite sides of the panels.

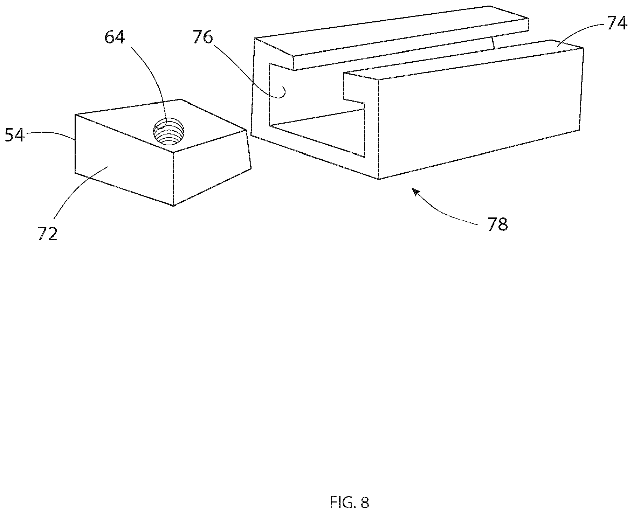

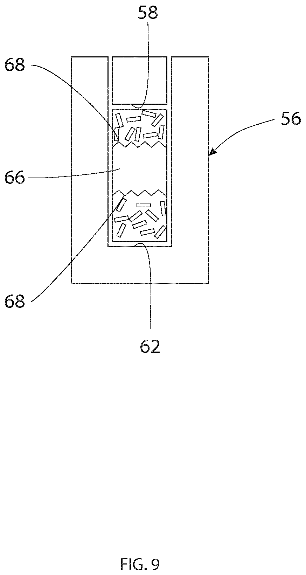

Figure 8 is a representation of one of the nuts (54) used in the gang channel of this disclosure. The method of constructing the nut (54) is similar to that of the nut plate (10) and is represented in Figure 9. In the construction of the nut (54), the mixture (22) of the aluminum oxide ceramic material powder (24) and the silicon-carbide crystal whiskers (26) is prepared. The mixture (22) is put into a high temperature, high pressure press (56) for forming a blank to be used in constructing the nut (54). In Figure 9 the aluminum oxide ceramic material powder (24) and the silicon-carbide crystal whiskers (26) are represented schematically and are not shown to scale. The press (56) has mold die pieces (58), (62) that are configured to form a blank for the nut (54) from the aluminum oxide ceramic material powder and the silicon-carbide crystal whiskers of the mixture (22). The mixture (22) is positioned in the press (56) between the press die pieces (58), (62) and is hot pressed at a temperature of over 1649°C (3,000 degrees Fahrenheit) while the mixture is compressed at a high pressure to form a blank of the nut (54). The blank of the nut (54) is dense and has a fine grain size. External pressure applied to the mixture (22) simultaneously with the temperature of the press (56) produces a good consolidation of the aluminum oxide ceramic material and the reinforcing silicon-carbide crystal whiskers. The aluminum oxide ceramic material and the reinforcing silicon-carbide crystal whiskers produce the blank of the nut (54) of hard ceramic material with high fracture toughness.

To form the screw threaded interior surface (64) in the nut (54), again a graphite pre-form insert (66) is machined with external screw threads (68) that are complementary to the screw threaded interior surface (64) of the nut (54). As represented in Figure 9, the pre-form (66) is placed inside the mixture (22) in the press (56). During heating and compression of the mixture (22) in the press (56) into the dense, finished ceramic blank of the nut (54), the screw threaded interior surface (64) of the nut (54) is formed around the graphite pre-form (66). After the hot pressing of the mixture (22) forming the blank of the nut (54) is completed, the soft graphite pre-form (66) having the external screw thread (68) is easily cleaned out of the nut (54), leaving a cost-efficient, clean, precise screw threaded interior surface (64) in the nut (54). Because the screw threaded interior surface (64) is formed during the pressure sintering around the pre-form (66), no shrinkage of the screw threaded interior surface (64) occurs. This enables the production of a high tolerance screw threaded interior surface (64) that matches closely to a screw threaded exterior surface of a mating fastener bolt.

A channel interface surface, for example the hex shaped exterior surface (72) of the nut (54) can then be machined on the nut (54). Alternatively, the channel interface surface (72) could be molded on the nut (54).

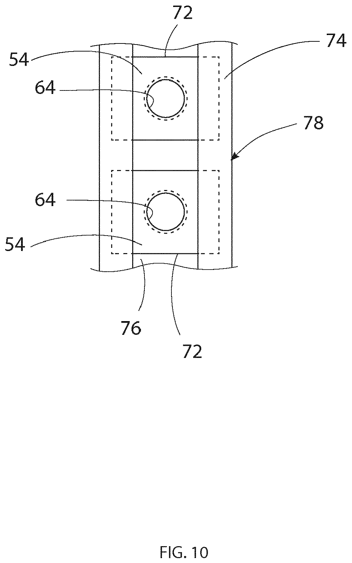

Figure 8 is a representation of a perspective view of the nut (54) and an end of the channel (74) with which the nut is used. The channel (74) is constructed of ceramic matrix composite material (CMC), such as oxide CMC or non-oxide CMC, but could be constructed of other equivalent types of materials. Nuts of SiC whisker reinforced alumina would most likely be used with the channel made out of oxide CMC since the CTE are similar, whereas the Si₃N₄ would be most likely to be used with non-oxide CMC like SiC/SiC since the CTE are also similar but much lower. The channel interface surface (72) of the nut (54) is dimensioned to fit in sliding engagement in the interior channel (76) of the channel member (74) in a conventional manner in producing the gang channel (78) represented in Figure 10. One or more nuts (54) can be inserted into the interior channel (76) in constructing the gang channel (78). The design of this type of ceramic gang channel allows the CMC channel to hold the individual ceramic threaded nuts in place, but permits the nuts to both slide in the channel as well as float. This helps account for tolerances and misalignment. The nuts act as individual entities while being held in place and allowing for only one side access to tighten the bolts when fastening components.

As various modifications could be made in the construction of the apparatus and its method of operation herein described and illustrated without departing from the scope of the invention, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. A nut plate (10) comprising:
the nut plate (10) being constructed of a ceramic material, the ceramic material being a mixture of an aluminum oxide powder (24) reinforced with silicon-carbide crystal whiskers (26) in the aluminum oxide ceramic material; and
a plurality of screw threaded interior surfaces (20) in the nut plate.

2. An article comprising the nut plate (10) of claim 1, further comprising:
a plurality of bolts (52), each bolt of the plurality of bolts (52) being screw threaded into a screw threaded interior surface (20) of the plurality of screw threaded interior surfaces (20) in the nut plate (10).

3. The article of claim 2, further comprising:
each bolt (52) is constructed of a mixture of aluminum oxide ceramic material reinforced with silicon-carbide crystal whiskers.

4. The article of claims 2 or 3, further comprising:
a first ceramic matrix composite component (42);
a second ceramic matrix composite component (44); and,
the first ceramic matrix composite component (42) and the second ceramic matrix composite component (44) being secured to the nut plate (10) by the plurality of bolts (52).

5. A method of securing components together comprising:
constructing a nut plate (10) of a ceramic material powder (24), the ceramic material being a mixture of an aluminum oxide powder (24) reinforced with silicon-carbide crystal whiskers (26) in the aluminum oxide ceramic material;
providing a plurality of fastener holes (18) in the nut plate (10), the fastener holes (18) each having a screw threaded interior surface (20);
providing a first component (42) with fastener holes (46);
providing a second component (44) with fastener holes (48);
positioning the first component (42) adjacent the nut plate (10) and aligning the fastener holes (46) of the first component (42) with fastener holes (18) of the nut plate (10);
positioning the second component (44) adjacent the nut plate (10) and aligning fastener holes (48) of the second component (44) with fastener holes (18) of the nut plate (10); and,
inserting fasteners (52) through the aligned fastener holes (46) of the first component (42) and the fastener holes (18) of the nut plate (10) and inserting fasteners (52) through the fastener holes (48) of the second component (44) aligned with the fastener holes (18) of the nut plate (10).

6. The method of claim 5, further comprising:
forming the fastener holes (18) in the nut plate (10) by positioning inserts (36) inside the ceramic material powder (24) at positions of the fastener holes (18);
simultaneously heating and pressurizing the ceramic material powder (24) creating the nut plate (10); and,
removing the inserts (36) from the nut plate (10) creating the screw threaded interior surfaces (20) inside the nut plate (10).

## Patentansprüche

1. Mutternplatte (10), umfassend:
dass die Mutternplatte (10) aus einem keramischen Material konstruiert ist, wobei das keramische Material eine Mischung aus einem Aluminiumoxidpulver (24) ist, das mit Siliziumkarbid-Kristall-Whiskern (26) in dem Aluminiumoxid-Keramikmaterial verstärkt ist; und
eine Mehrzahl von Schraubgewinde-Innenflächen (20) in der Mutternplatte.

2. Gegenstand, umfassend die Mutternplatte (10) nach Anspruch 1, ferner umfassend:
eine Mehrzahl von Bolzen (52), wobei jeder Bolzen der Mehrzahl von Bolzen (52) in eine Schraubgewinde-Innenfläche (20) der Mehrzahl von Schraubgewinde-Innenflächen (20) in der Mutternplatte (10) eingeschraubt ist.

3. Gegenstand nach Anspruch 2, ferner umfassend:
dass jeder Bolzen (52) aus einer Mischung aus Aluminiumoxidkeramikmaterial hergestellt ist, das mit Siliziumkarbid-Kristall-Whiskern verstärkt ist.

4. Gegenstand nach den Ansprüchen 2 oder 3, ferner umfassend:
eine erste Keramikmatrix-Verbundkomponente (42);
eine zweite Keramikmatrix-Verbundkomponente (44);
wobei die erste Keramikmatrix-Verbundkomponente (42) und die zweite Keramikmatrix-Verbundkomponente (44) durch die Mehrzahl von Bolzen (52) an der Mutternplatte (10) befestigt sind.

5. Verfahren zum Befestigen von Komponenten aneinander, mit den Schritten:
Konstruieren einer Mutternplatte (10) aus einem Keramikmaterialpulver (24), wobei das Keramikmaterial eine Mischung aus einem Aluminiumoxidpulver (24) ist, das mit Siliziumkarbid-Kristall-Whiskern (26) in dem Aluminiumoxidmaterial verstärkt ist;
Bereitstellen einer Mehrzahl von Befestigungslöchern (18) in der Mutternplatte (10), wobei die Befestigungslöcher (18) jeweils eine Schraubgewinde-Innenfläche (20) aufweisen;
Bereitstellen einer ersten Komponente (42) mit Befestigungslöchern (46);
Bereitstellen einer zweiten Komponente (44) mit Befestigungslöchern (48);
Positionieren der ersten Komponente (42) benachbart zur Mutternplatte (10) und Ausrichten der Befestigungslöcher (46) der ersten Komponente (42) mit Befestigungslöchern (18) der Mutternplatte (10);
Positionieren der zweiten Komponente (44) benachbart zur Mutternplatte (10) und Ausrichten der Befestigungslöcher (48) der zweiten Komponente (44) mit Befestigungslöchern (18) der Mutternplatte (10); und
Einführen von Verbindungselementen (52) durch die ausgerichteten Befestigungslöcher (46) der ersten Komponente (42) und die Befestigungslöcher (18) der Mutternplatte (10) und
Einführen von Verbindungselementen (52) durch die Befestigungslöcher (48) der zweiten Komponente (44), die mit den Befestigungslöchern (18) der Mutternplatte (10) ausgerichtet sind.

6. Verfahren nach Anspruch 5, ferner mit den Schritten:
Bilden der Befestigungslöcher (18) in der Mutternplatte (10) durch Positionieren von Einsätzen (36) innerhalb des Keramikpulvers (24) an den Positionen der Befestigungslöcher (18);
gleichzeitiges Erwärmen und Unterdrucksetzen des Keramikmaterialpulvers (24), das die Mutternplatte (10) bildet; und,
Entfernen der Einsätze (36) von der Mutternplatte (10), wodurch die Schraubgewinde-Innenflächen (20) innerhalb der Mutternplatte (10) entstehen.

## Revendications

1. Plaque écrou (10) comprenant :
la plaque écrou (10) étant constituée d'un matériau de céramique, le matériau de céramique étant un mélange d'une poudre d'oxyde d'aluminium (24) renforcée par des trichites de cristal de carbure de silicium (26) dans le matériau de céramique d'oxyde d'aluminium ; et
une pluralité de surfaces intérieures filetées (20) dans la plaque écrou.

2. Article comprenant la plaque écrou (10) de la revendication 1, comprenant en outre :
une pluralité de boulons (52), chaque boulon de la pluralité de boulons (52) étant vissé dans une surface intérieure filetée (20) de la pluralité de surfaces intérieures filetées (20) dans la plaque écrou (10).

3. Article selon la revendication 2, comprenant en outre :
chaque boulon (52) est constitué d'un mélange de matériau de céramique d'oxyde d'aluminium renforcé par des trichites de cristal de carbure de silicium.

4. Article selon les revendications 2 ou 3, comprenant en outre :
un premier composant composite à matrice céramique (42) ;
un second composant composite à matrice céramique (44) ; et,
le premier composant composite à matrice céramique (42) et le second composant composite à matrice céramique (44) étant fixé à la plaque écrou (10) par la pluralité de boulons (52).

5. Procédé de fixation de composants comprenant les étapes consistant à :
construire une plaque écrou (10) d'une poudre de matériau de céramique (24), le matériau de céramique étant un mélange d'une poudre d'oxyde d'aluminium (24) renforcée par des trichites de cristal de carbure de silicium (26) dans le matériau de céramique d'oxyde d'aluminium ;
fournir une pluralité de trous de fixation (18) dans la plaque écrou (10), les trous de fixation (18) ayant chacun une surface intérieure filetée (20) ;
fournir un premier composant (42) avec des trous de fixation (46) ;
fournir un second composant (44) avec des trous de fixation (48) ;
positionner le premier composant (42) adjacente à la plaque écrou (10) et aligner les trous de fixation (46) du premier composant (42) avec les trous de fixation (18) de la plaque écrou (10) ;
positionner le second composant (44) adjacent à la plaque écrou (10) et aligner les trous de fixation (48) du second composant (44) avec les trous de fixation (18) de la plaque écrou (10) ; et,
insérer des fixations (52) à travers les trous de fixation alignés (46) du premier composant (42) et les trous de fixation (18) de la plaque écrou (10) et insérer des fixations (52) à travers les trous de fixation (48) du second composant (44) alignés avec les trous de fixation (18) de la plaque écrou (10).

6. Procédé selon la revendication 5, comprenant en outre les étapes consistant à :
former les trous de fixation (18) dans la plaque écrou (10) en positionnant des inserts (36) dans la poudre de matériau de céramique (24) au niveau de positions des trous de fixation (18) ;
simultanément chauffer et mettre sous pression la poudre de matériau de céramique (24) en créant la plaque écrou (10) ; et,
retirer les inserts (36) de la plaque écrou (10) en créant les surfaces intérieures filetées (20) à l'intérieur de la plaque écrou (10).
